# EUROPEAN PATENT SPECIFICATION

(11) **EP 3 122 864 B1**
(45) Date of publication and mention of the grant of the patent: **07.07.2021**
(21) Application number: 15715913.8
(22) Date of filing: 24.03.2015
(51) Int. Cl.: C11D 17/04, B65D 65/46

(54) **PRINTED WATER SOLUBLE POUCH**
GEDRUCKTER WASSERLÖSLICHER BEUTEL
SACHET IMPRIMÉ SOLUBLE DANS L'EAU

(30) Priority: 27.03.2014 US 201461971019 P
(43) Date of publication of application: 01.02.2017
(73) Proprietor: The Procter & Gamble Company, Cincinnati, OH 45202 (US)
(72) Inventor: MURPHY, Bryan, Patrick, Cincinnati, Ohio 45202 (US); LABEQUE, Regine, B-1853 Brussels (BE); BRANDT SANZ, Miguel, B-1853 Brussels (BE); CURCIC, Nikola, B-1853 Brussels (BE); GABRIELE, Andrea, B-1853 Brussels (BE)
(74) Representative: P&G Patent Belgium UK
(86) International application number: PCT/US2015/022173
(87) International publication number: WO 2015/148461

(56) References cited:
- WO-A1-2008/073299
- WO-A1-2010/135238
- WO-A1-2012/107113
- WO-A1-2013/131924
- WO-A2-2008/004199
- None

## Description

### FIELD OF THE INVENTION

Water Soluble Pouches.

### BACKGROUND OF THE INVENTION

Water soluble pouches for delivering substrate treatment agents, such as dishwashing detergents, laundry detergents, surface cleaning, and laundry treatment compositions, are increasing in popularity globally. Typically, the consumer places the pouch in a compartment in the dishwashing machine or in the drum of a clothing washing machine, the pouch is exposed to water in the wash, and the pouch dissolves and releases the treatment agent.

The substrate treatment agent can be a powder, liquid. Some pouches have multiple compartments and liquids in each of the compartments. Some pouches even have multiple compartments with one compartment containing a powder and another compartment containing a liquid. Individual compartments of multi-compartment pouches can have different dissolution rates, thereby providing for delivery of the substrate treatment agents within individual compartments at different times during the cycle of the wash.

Typically, marketers of pouches of substrate treatment agents sell a plurality of pouches within a single container. To promote ease of use and minimize waste, the pouches within a container are not individually packaged in secondary packages.

For many consumers, their highest focus on the products they choose is at the point of using the product in their home. This can be a critical time for marketers to communicate the benefits that can be achieved by using the product. It can also be a time when consumers are most receptive to receiving instructions from the marketer on how to use the product to obtain the maximum benefit from the product.

In absence of a secondary package, instructions to the consumer can be provided on the pouch itself. Since the pouch is designed to dissolve in use, the medium that carries the instructions needs to also dissolve in use. Since the pouch is water soluble, the instructions can be printed on the pouch or the precursor webs used to form the pouch.

Providing printing on water soluble pouches faces a number of limitations. First, the pouches are often handled in a moist or wet environment such as a kitchen or laundry room. If the consumer's fingers are wet, the water from the consumer's fingers can partially dissolve the pouch. If the pouch is carrying printed instruction on the exterior of the pouch, the printing can become smudged and illegible. Further, as the pouches are filled into containers on a manufacturing line, the pouches may abrade with one another, thereby smudging or otherwise marring printing on the exterior of the pouch. Further, fixing ink to water soluble materials can be challenging and ink on the exterior of a pouch can transfer to a surface that the pouch comes into contact with. Such surfaces might include a fine butcher block kitchen counter, an article of light colored clothing resting on the top of an automatic dryer that is next the washing machine, the interior of the container containing the pouches, the consumer's fingers, and or manufacturing equipment used to manufacture the pouches.

WO2008073299 discloses a water-soluble unit dose article wherein at least a part of the water-soluble film has a printed image. The printed image can optionally be on the inside of the film.

WO2013131924 discloses various latex ink compositions.

To overcome these potential issues, the printing can be provided on an interior surface of the pouches. Such an arrangement can protect the printing from being abraded, being transferred to other surfaces, and prematurely wetted by the consumer. However, printing on the interior surface of the pouches is then exposed to the treatment agent within the pouch. The treatment agents may include surfactants, bleaches, solvents, and other substances that can degrade the ink disposed on an interior surface of the pouch.

With these limitations in mind, there is a continuing unaddressed need for water soluble pouches that can be printed on the interior.

### SUMMARY OF THE INVENTION

A water soluble pouch comprising: a water soluble first sheet; a water soluble second sheet joined to the water soluble first sheet to at least partially define a chamber containing a substrate treatment agent; and an ink; wherein each of the first sheet and the second sheet have an interior surface and an opposing exterior surface; wherein the chamber is at least partially defined by the interior surface of the first sheet and the interior surface of the second sheet; and wherein the ink comprises a pigment
wherein said pigment is a diketopyrrolo-pyrrole of the general formula 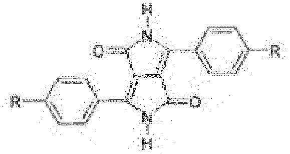
wherein each R can be the same or different and each R represents a cyano group, methyl or an alkyl group, a hydrogen group, a phenyl group, or a halogen group;
wherein said ink is between said substrate treatment agent and at least one of said interior surface of said first sheet and said interior surface of said second sheet.

### BRIEF DESCRIPTION OF THE DRAWINGS

Figure 1 is an illustration of a water soluble pouch illustrating ink on the interior surface of the first sheet and visible through the first sheet from the exterior of the water soluble pouch.
Figure 2 is cross section view of a water soluble pouch in which ink is disposed on the interior surface of the first sheet and visible through the first sheet and ink is disposed on the interior surface of the second sheet and visible through the second sheet.
Figure 3 is an illustration of a cross-section of a water soluble pouch in which ink 60 is disposed on the interior surface of the first sheet and interior surface of the second sheet as well as on the exterior surface of the first sheet and the exterior surface of the second sheet.
Figure 4 is an illustration of a multi-chamber pouch having ink on the interior surface of the first sheet.

### DETAILED DESCRIPTION OF THE INVENTION

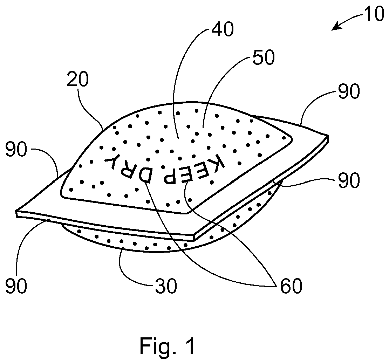

A water soluble pouch 10 is shown in Fig. 1. The water soluble pouch 10 can comprise a water soluble first sheet 20 and a water soluble second sheet 30 joined to the water soluble first sheet 20 to at least partially define a chamber 40 containing a substrate treatment agent 50. The water soluble pouch 10 can further comprise an ink 60.

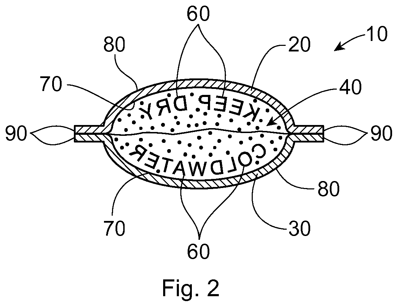

Each of the first sheet 20 and second sheet 30 can have an interior surface 70 and an opposing exterior surface 80, as shown in Fig. 2. The interior surface 70 of the first 20 and second sheet 30 can together form a chamber 40. The edges 90 of the first sheet 20 and second sheet 30 can be joined to one another to form the chamber 40. Within the chamber 40, the substrate treatment agent 50 can be disposed.

The edges 90 can each have a length less than about 100 mm, or even less than about 60 mm, or even less than about 50 mm. The plan view of the of the water soluble pouch 10 can be substantially rectangular, substantially square, substantially circular, elliptical, superelliptical, or any other desired shape that is practical to manufacture. The overall plan area of the water soluble pouch can be less than about 10000 mm², or even less than about 2500 mm². Sized and dimensioned as such, the water soluble pouch 10 can fit conveniently within the grasp of an adult female hand. Further, for water soluble pouches 10 intended for use in automatic dishwashing machines, such a size can conveniently fit in the detergent receptacle within the machine.

The edges 90 of the first sheet 20 and second sheet 30 can be bonded to one another. For example, the edges 90 of the first sheet 20 and second sheet 30 can be joined to one another by a thermal bond or a solvent weld or combination thereof. A thermal bond can be formed by applying one or more of heat and pressure to the two materials to be bonded to one another. A solvent weld can be formed by applying a solvent to one or both of the first sheet and second sheet and contacting the first sheet and second sheet in the location at which a bond is desired. For water soluble pouches, the solvent can be water and or steam.

The first sheet 20 and the second sheet 30 can be sufficiently translucent, or even transparent, such that the substrate treatment agent 50 is visible from the exterior of the pouch 10. That is, the consumer using the pouch 10 can see the substrate treatment agent 50 contained in the pouch 10.

The water soluble pouch 10 can further comprise an ink 60 disposed on at least one of the interior surface 70 of the first sheet 20 and the interior surface 70 of the second sheet 30. By placing ink 60 on one of the interior surfaces 70, the ink 60 can be protected from being scuffed, transferred to other surfaces, and being solubilized by water on the consumer's hand when she handles the pouch 10.

The ink 60 can be between the substrate treatment agent 50 and at least one of the interior surface 70 of the first sheet 20 and the interior surface 70 of the second sheet 30.

Substrate treatment agents 50 typically contain components designed to help remove soil and stains from surfaces such as countertops, flooring, bath tubs, shower walls, shower curtains, dishware, cookware, textiles, garments, and the like. Many of these components can chemically interact with ink compositions.

In the market, the duration of the supply chain from manufacture to use by the consumer can range from a few days to in excess of one year. Thus, an ink 60 disposed on the interior or exterior of the pouch 10 needs to be sufficiently stable to function during a potentially long duration. If the ink 60 is used to convey usage instructions, such usage instruction need to remain clear enough to be understood by the consumer. In some situations, just being legible may not be enough since a consumer might perceive degraded printed ink as being an indicator that the product is spoiled, expired, old, or otherwise not in condition for optimum performance.

The ink 60 can be a water soluble ink 60. The ink 60 can comprise Pigment Red 254. Pigment Red 254 is an organic pigment. An ink 60 comprising Pigment Red 254 can be obtained from Sun Chemical, Parsippany, New Jersey, United States of America. Ink 60 comprising Pigment Red 254 can be sufficiently stable when exposed to a substrate treatment agent 50 comprising liquid or powder bleaching agent at a level typical of household formulations. The ink 60 can optionally comprise Pigment Red 184. The ink 60 can comprise Pigment Red 184 and Pigment Red 254.

The ink 60 can optionally comprise AQUADESTRUCT black. The ink 60 can comprise AQUADESTRUCT white. AQUADESTRUCT inks are available from Sun Chemical, Parsippany, New Jersey, United States of America. The ink 60 can optionally comprise one or more of DPW 354 White, DPW 354 Black, and DPW 354 Red, available from Sun Chemical, Parsippany, New Jersey, United States of America. The ink 60 can optionally comprise pigment white 6 (titanium dioxide). The ink 60 can optionally comprise pigment black 7 (carbon). The ink 60 can optionally comprise pigment black 6. The ink 60 can optionally comprise pigment black 8. The ink 60 can optionally comprise pigment black 8. The ink 60 can optionally comprise pigment white 6. Any one or more than one of the inks 60 disclosed herein, including AQUADESTRUCT black, AQUADESTRUCT white, and an ink comprising Pigment Red 254, may be located on an interior surface 70 or exterior surface 80 of one or both of the first sheet 20 and second sheet 30. The ink 60 can be covered by one or more protective layers. The ink 60 can optionally comprise DPW 354 ink available from Sun Chemical, Parsippany, New Jersey, United States of America.

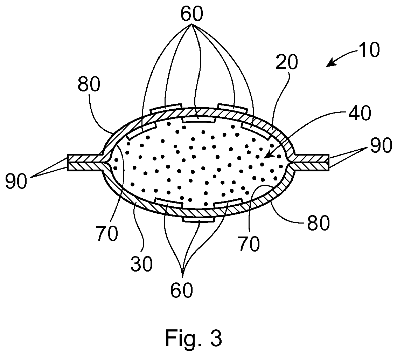

Instructions for using the pouch 10 can be printed on one or both of the interior surface 70 and exterior surface 70 of one or both of the first sheet 20 and second sheet 30, for example as shown in Fig. 3. The instructions may provide directions on the temperature of the wash cycle to be used, the duration of the wash cycle to be used, what type of substrates may be treated with the substrate treatment agent 50, the recommendation to avoid premature wetting of the pouch 10, what type of appliance within which the pouch 10 should not be used, product manufacture/expiration date, ingredient list, contact information for the manufacturer, recommended storage conditions, and the like. Providing the instructions integral with the pouch 10 so that they are apparent to the consumer at the time of use can make the pouch 10 easier to use by the consumer.

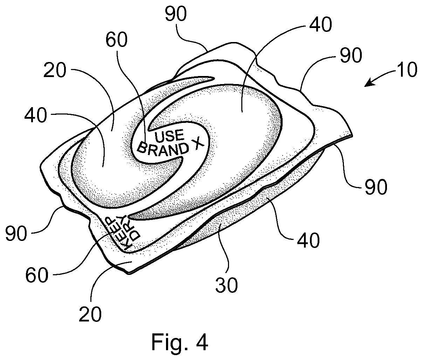

The pouch 10 can have a plurality of chambers 40. For example a plurality of pouches 10 can be joined to one another to for a multi-compartment pouch. One or more pouches of the kind illustrated in Fig. 2 can be joined to one another. The pouch 10 can be of the type presently marketed as TIDE PODS, CASCADE ACTION PACS,CASCADE PLATINUM, CASCADE COMPLETE, ARIEL 3 IN 1 PODS, TIDE BOOST ORIGINAL DUO PACs, TIDE BOOST FEBREZE SPORT DUO PACS, TIDE BOOST FEE DUO PACS, TIDE BOOSE VIVID WHITE BRIGHT PACS, DASH, FAIRY (PLATINUM, ALL-IN ONE, YES (PLATINUM ALL-IN ONE, JAR (PLATINUM, ALL-IN ONE, DREFT (PLATINUM, ALL-IN ONE by The Procter & Gamble Company in various geographies globally. As shown in Fig. 4, the pouch 10 can have 3 chambers 40. The first sheet 20 and second sheet 30 can form a first chamber 40. Another first sheet 20 and second sheet 30 can form a second chamber 40 or one or more additional chambers 40. The two pouches 10 can be joined together. The chambers 40 can be superimposed upon one another. The chambers 40 can be a in a side by side relationship.

### Ink

The ink 60 can comprise pigment, water, binder, bactericide, and solvent. The ink 60 comprises a pigment wherein the pigment is a diketopyrrolo-pyrrole. Inks 60 comprising the aforesaid pigments are thought to be resistant to degradation by bleaching agents. This is thought to occur because the pigments do not have a R-N=N-R' functional group, where R and R' are aryl or alkyl, which is thought to be susceptible to degradation by bleaching agents. Without being bound by theory pigments having a have a R-N=N-R' functional group, where R and R' are aryl or alkyl, such as azo types of pigments, are thought to be susceptible to attachment by hydrogen peroxide. If the substrate treatment agent 50 has a little or no bleaching agent or the pouch 10 contains a substrate treatment agent 50 that has a significant amount of bleaching agent and a short supply chain from manufacture to use by the consumer, azo type pigments, such as pigment red 184, can be used in ink 60.

The diketopyrrolo-pyrrole functional group has the following general structure: 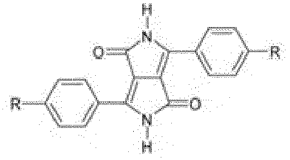 each R can be the same or different and each R represents a cyano group, methyl or an alkyl group, a hydrogen group, a phenyl group, or a halogen group

Pigments having a diketopyrrolo-pyrrole functional group can be selected from the group consisting of pigment red 254, pigment red 255, pigment red 264, pigment red 272, pigment orange 73, and mixtures thereof. The structures of the aforesaid pigments are as follows:
Pigment Red 254: 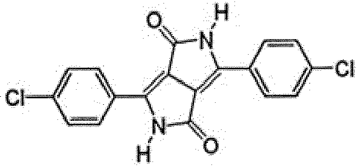
Pigment Red 255: 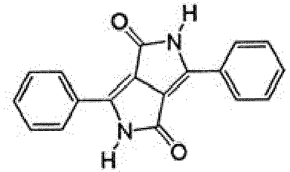
Pigment Red 264: 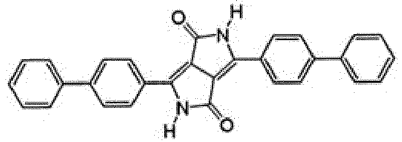
Pigment Red 272: 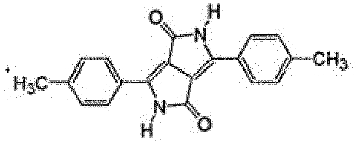
Pigment Orange 73:

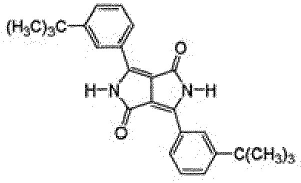

Pigments having a diketopyrrolo-pyrrole functional group can be as set forth in the following table.

| R | λₘₐₓ (NMP) | ε | Shade (PVC) |
|---|---|---|---|
| 3-CF₃ | 509 | ∼21'500 | Yellowish Orange |
| 3-CN | 515 | ∼20'500 | Yellowish Orange |
| 3-Cl | 512 | ∼27'000 | Orange |
| 4-t-Bu | 511 | ∼42'000 | Orange |
| H | 504 | ∼33'000 | Yellowish Red |
| 4-Br | 515 | ∼35'000 | Bluish Red |
| 4-Ph | 534 | | Bluish Red |
| 4-NMe₂ | 554 | ∼81'500 | Violet-Blue |

The anthraquinone functional group not according to the present invention has the following structure:

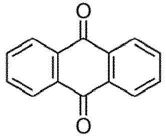

Pigments having an anthraquinone functional group can be selected from the group consisting of pigment red 177, pigment red 168, and mixtures thereof. The structures of the aforesaid pigments are as follows:
Pigment Red 177: 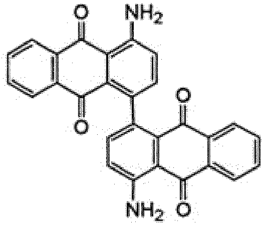
Pigment Red 168 (Dibromanthrone):

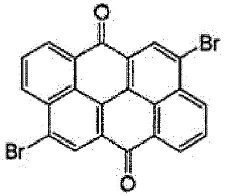

The quinacridone functional group has the following structure:

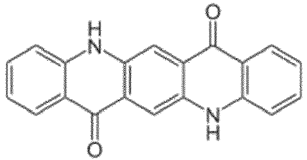

Pigments having a quinacridone functional group not according to the present invention can be selected from the group consisting of pigment violet 19, pigment red 202, pigment red 122, and mixtures thereof. The structures of the aforesaid pigments are as follows:
Pigment Violet 19: 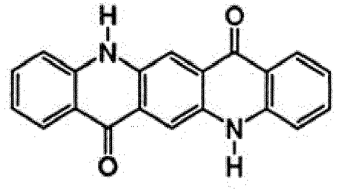
Pigment Red 202: 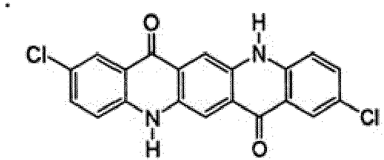
Pigment Red 122:

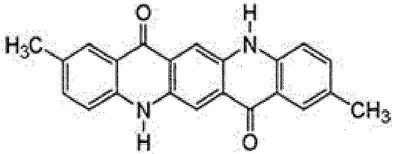

The phthalocyanine pigment particles can comprising a phthalocyanine chromogen structure as a main component, and a substituted soluble metal-phthalocyanine dye as a minor component that non-covalently bonds with the phthalocyanine chromogen structure, molecules of the substituted soluble metal-phthalocyanine dye can be intercalated between layers of the phthalocyanine chromogen structure, wherein the substituted soluble metal-phthalocyanine dye is of the general formula. 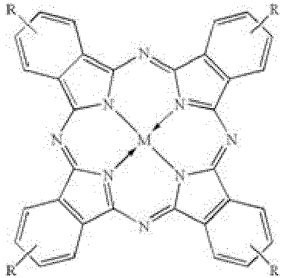 where: M is a metal or group of metals and atoms capable of bonding to a central cavity of the phthalocyanine molecule; and each R independently represents H or a sterically bulky substituent, provided that at least one R is other than hydrogen, and the sterically bulky substituent is a wax-like aliphatic group or an alkylaryl or arylalkyl group, where: the alkylaryl or arylalkyl group comprises a C=N or C=S double bond, or the alkylaryl or arylalkyl group is fully saturated consisting of a hydrocarbon group;

The coumarin not according to the present invention has the general formula of the following:

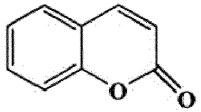

The naphthalimide not according to the present invention has the general formula of the following:

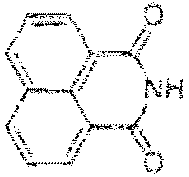

The ink 60 can be water soluble.

The ink 60 can be as set forth in the following table can be practical.

| Ingredient | Weight % |
|---|---|
| Water | 68.5 |
| Pyrrolo[3,4-c]pyrrole-1,4-dione, 3,6-bis(4-chlorophenyl)-2,5-dihydro- | 14.1 |
| Acetic acid ethenyl ester, polymer with ethenol | 10.3 |
| Methanol | 0.1 |
| Propanol, oxybis- | 0.1 |
| Ammonia Salt of Modified Styrene Acrylic Polymer | 4.8 |
| 1-Propanol | 2.0 |
| Ethanol, 2-(2-ethoxyethoxy)- | 0.1 |

The ink 60 can comprise from about 1% by weight to about 50% by weight a pigment.

The ink 60 can comprise from about 3% by weight to about 40% by weight a pigment. The ink 60 can comprise from about 5% by weight to about 35% by weight a pigment. The ink 60 can comprise from about 7% by weight to about 25% by weight a pigment. The ink 60 can comprise from about 9% by weight to about 20% by weight a pigment.

The ink 60 can comprise a polyvinyl alcohol binder. The ink 60 can comprise about 1% to about 20% by weight of polyvinyl alcohol binder. The ink 60 can comprise about 5% to about 15% by weight of polyvinyl alcohol binder. The ink 60 can comprise about 8% to about 12% by weight of polyvinyl alcohol binder.

The ink 60 can partially absorb into the sheet upon which it is printed and partially dry on the surface. The absorption and drying can take between about 0.1 and about 5 seconds, or even from about 1 to about 3 seconds. The amount of ink 60 printed onto the water-soluble film can affect the absorption and drying rate. The ink 60 can be applied at a weight from about 0.1 to about 30 g/m² of sheet, or even from about 0.5 to about 18 g/m² of sheet, or even from about 1 to about 10 g/m² of sheet to obtain good printing quality. From about 1 % to about 100 %, or even about 10% to about 40%, of one or both of the interior surface 70 and exterior surface 80 can be printed upon. When printed upon the sheet, the ink 60 can partially dissolve the sheet and be absorbed into the sheet.

### Water Soluble Sheets

The first sheet 20 and second sheet 30 can be a water soluble material. The water soluble material can be a polymeric material that can be formed into a sheet or film. The sheet material can, for example, be obtained by casting, blow-molding, extrusion or blown extrusion of the polymeric material, as known in the art.

The first sheet 20 and second sheet 30 can have a thickness of from about 20 to about 150 micron, or even about 35 to about 125 micron, or even about 50 to about 110 micron, or even about 76 micron.

The first sheet 20 and second sheet can have a water-solubility of at least 50%, or even at least 75%, or even at least 95%, as measured by the method set out hereafter using a glass-filter with a maximum pore size of 20 microns: 50 grams ± 0.1 gram of sheet material is added in a preweighed 400 ml beaker and 245ml ± 1ml of distilled water is added. This is stirred vigorously on a magnetic stirrer, labline model No. 1250 or equivalent and 5 cm magnetic stirrer, set at 600 rpm, for 30 minutes at 24°C. Then, the mixture is filtered through a folded qualitative sintered-glass filter with a pore size as defined above (max. 20 micron). The water is dried off from the collected filtrate by any conventional method, and the weight of the remaining material is determined (which is the dissolved or dispersed fraction). Then, the percentage solubility or dispersability can be calculated.

Suitable polymers, copolymers or derivatives thereof suitable for use as pouch material can be selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. Suitable polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and suitably selected from polyvinyl alcohols, polyvinyl alcohol copolymers and hydroxypropyl methyl cellulose (HPMC), and combinations thereof. The level of polymer in the sheet material, for example a PVA polymer, can be at least 60%. The polymer can have any weight average molecular weight, such as from about 1000 to about 1,000,000, or even from about 10,000 to about 300,000, or even from about 20,000 to about 150,000.

Mixtures of polymers can also be used as the sheet material. This can be beneficial to control the mechanical and/or dissolution properties of the compartments or sheet, depending on the application thereof and the required needs. Suitable mixtures include for example mixtures wherein one polymer has a higher water-solubility than another polymer, and/or one polymer has a higher mechanical strength than another polymer. Also suitable are mixtures of polymers having different weight average molecular weights, for example a mixture of PVA or a copolymer thereof of a weight average molecular weight of about 10,000 to about 40,000, or even about 20,000, and of PVA or copolymer thereof, with a weight average molecular weight of about 100,000 to about 300,000, or even about 150,000. Also suitable herein are polymer blend compositions, for example comprising hydrolytically degradable and water-soluble polymer blends such as polylactide and polyvinyl alcohol, obtained by mixing polylactide and polyvinyl alcohol, typically comprising about 1 to about35% by weight polylactide and about 65% to about 99% by weight polyvinyl alcohol. Suitable for use herein are polymers which are from about 60% to about 98% hydrolysed, or even about 80% to about 90% hydrolysed, to improve the dissolution characteristics of the material.

Suitable sheets can exhibit good dissolution in cold water, meaning unheated distilled water. Such films can exhibit good dissolution at a temperature of about 24°C, or even about 10°C. By good dissolution it is meant that the sheet exhibits water-solubility of at least about 50%, or even at least about 75%, or even at least about 95%, as measured by the method set out herein and described above.

Suitable sheets can be those supplied by Monosol under the trade references M8630, M8900, M8779, M8310, films described in US 6 166 117 and US 6 787 512 and PVA films of corresponding solubility and deformability characteristics. Further suitable sheets can be those described in US2006/0213801, WO 2010/119022 and US6787512.

Suitable sheets can be those resins comprising one or more PVA polymers. The water soluble sheet resin can comprise a blend of PVA polymers. For example, the PVA resin can include at least two PVA polymers, wherein as used herein the first PVA polymer has a viscosity less than the second PVA polymer. A first PVA polymer can have a viscosity of at least 8 centipoise (cP), 10 cP, 12 cP, or 13 cP and at most 40 cP, 20 cP, 15 cP, or 13 cP, for example in a range of about 8 cP to about 40 cP, or 10 cP to about 20 cP, or about 10 cP to about 15 cP, or about 12 cP to about 14 cP, or 13 cP. Furthermore, a second PVA polymer can have a viscosity of at least about 10 cP, 20 cP, or 22 cP and at most about 40 cP, 30 cP, 25 cP, or 24 cP, for example in a range of about 10 cP to about 40 cP, or 20 to about 30 cP, or about 20 to about 25 cP, or about 22 to about 24, or about 23 cP. The viscosity of a PVA polymer is determined by measuring a freshly made solution using a Brookfield LV type viscometer with UL adapter as described in British Standard EN ISO 15023-2:2006 Annex E Brookfield Test method. It is international practice to state the viscosity of 4% aqueous polyvinyl alcohol solutions at 20 °C. All viscosities specified herein in cP should be understood to refer to the viscosity of 4% aqueous polyvinyl alcohol solution at 20 °C, unless specified otherwise. Similarly, when a resin is described as having (or not having) a particular viscosity, unless specified otherwise, it is intended that the specified viscosity is the average viscosity for the resin, which inherently has a corresponding molecular weight distribution.

The individual PVA polymers can have any suitable degree of hydrolysis, as long as the degree of hydrolysis of the PVA resin is within the ranges described herein. Optionally, the PVA resin can, in addition or in the alternative, include a first PVA polymer that has a Mw in a range of about 50,000 to about 300,000 Daltons, or about 60,000 to about 150,000 Daltons; and a second PVA polymer that has a Mw in a range of about 60,000 to about 300,000 Daltons, or about 80,000 to about 250,000 Daltons.

The PVA resin can still further include one or more additional PVA polymers that have a viscosity in a range of about 10 to about 40 cP and a degree of hydrolysis in a range of about 84% to about 92%.

When the PVA resin includes a first PVA polymer having an average viscosity less than about 11 cP and a polydispersity index in a range of about 1.8 to about 2.3, then in one type of embodiment the PVA resin contains less than about 30 wt% of the first PVA polymer. Similarly, when the PVA resin includes a first PVA polymer having an average viscosity less than about 11 cP and a polydispersity index in a range of about 1.8 to about 2.3, then in another, non-exclusive type of embodiment the PVA resin contains less than about 30 wt% of a PVA polymer having a Mw less than about 70,000 Daltons.

Of the total PVA resin content in the film described herein, the PVA resin can comprise about 30 to about 85 wt.% of the first PVA polymer, or about 45 to about 55 wt.% of the first PVA polymer. For example, the PVA resin can contain about 50 wt.% of each PVA polymer, wherein the viscosity of the first PVA polymer is about 13 cP and the viscosity of the second PVA polymer is about 23 cP.

One type of embodiment is characterized by the PVA resin including about 40 to about 85 wt% of a first PVA polymer that has a viscosity in a range of about 10 to about 15 cP and a degree of hydrolysis in a range of about 84% to about 92%. Another type of embodiment is characterized by the PVA resin including about 45 to about 55 wt% of the first PVA polymer that has a viscosity in a range of about 10 to about 15 cP and a degree of hydrolysis in a range of about 84% to about 92%. The PVA resin can include about 15 to about 60 wt% of the second PVA polymer that has a viscosity in a range of about 20 to about 25 cP and a degree of hydrolysis in a range of about 84% to about 92%. One contemplated class of embodiments is characterized by the PVA resin including about 45 to about 55 wt% of the second PVA polymer.

When the PVA resin includes a plurality of PVA polymers the PDI value of the PVA resin is greater than the PDI value of any individual, included PVA polymer. Optionally, the PDI value of the PVA resin is greater than 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.5, or 5.0.

The PVA resin can have a weighted, average degree of hydrolysis (*H̅°̅*) between about 80 and about 92 %, or between about 83 and about 90 %, or about 85 and 89%. For example, *H̅°̅* for a PVA resin that comprises two or more PVA polymers is calculated by the formula *H̅°̅* = ∑(*Wi*·*Hᵢ*) where *Wᵢ* is the weight percentage of the respective PVA polymer and a *Hᵢ* is the respective degrees of hydrolysis. Still further it can be desirable to choose a PVA resin that has a weighted log viscosity (*µ̅*) between about 10 and about 25, or between about 12 and 22, or between about 13.5 and about 20. The *µ̅* for a PVA resin that comprises two or more PVA polymers is calculated by the formula *µ̅* = *e*^{∑*Wᵢ*·ln*µᵢ*} where 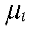 is the viscosity for the respective PVA polymers.

Yet further, it can be desirable to choose a PVA resin that has a Resin Selection Index (RSI) in a range of about 0.255 to about 0.315, or about 0.260 to about 0.310, or about 0.265 to about 0.305, or about 0.270 to about 0.300, or about 0.275 to about 0.295, or about 0.270 to about 0.300. The RSI is calculated by the formula; ∑(*Wᵢ*|*µᵢ* - *µₜ*|)/∑(*Wᵢµᵢ*), wherein *µₜ* is seventeen, *µᵢ* is the average viscosity each of the respective PVOH polymers, and *Wᵢ* is the weight percentage of the respective PVOH polymers.

Also suitable are water soluble sheets comprising a least one negatively modified monomer with the following formula:

[Y]-[G]ₙ

wherein Y represents a vinyl alcohol monomer and G represents a monomer comprising an anionic group and the index n is an integer of from 1 to 3. G can be any suitable comonomer capable of carrying of carrying the anionic group, optionally G is a carboxylic acid. G can be selected from the group consisting of maleic acid, itaconic acid, coAMPS, acrylic acid, vinyl acetic acid, vinyl sulfonic acid, allyl sulfonic acid, ethylene sulfonic acid, 2 acrylamido 1 methyl propane sulfonic acid, 2 acrylamido 2 methyl propane sulfonic acid, 2 methyl acrylamido 2 methyl propane sulfonic acid and mixtures thereof.

The anionic group of G can be selected from the group consisting of OSO₃M, SO₃M, CO₂M, OCO₂M, OPO₃M₂, OPO₃HM and OPO₂M Suitably, the anionic group of G can be selected from the group consisting of OSO₃M, SO₃M, CO₂M, and OCO₂M. Suitably, the anionic group of G can be selected from the group consisting of SO₃M and CO₂M.

Naturally, different sheet material and/or sheets of different thickness may be employed in making the compartments of the present invention. A benefit in selecting different films is that the resulting compartments may exhibit different solubility or release characteristics.

The sheet material herein can also comprise one or more additive ingredients. For example, it can be beneficial to add plasticizers, for example glycerol, ethylene glycol, diethyleneglycol, propylene glycol, sorbitol and mixtures thereof. Other additives may include water and functional detergent additives, including surfactant, to be delivered to the wash water, for example organic polymeric dispersants, etc.

### Printing

The ink 60 can be printed upon one or both of the first sheet 20 and second sheet 30. The ink 60 can be printed using any of the known techniques for printing on water soluble sheets. One technology that can be used is flexographic printing. A water soluble over print varnish, having little or no pigment, can be printed over the ink 60 to improve stability of the printing. The overprint varnish can be OPV AQUADESTRUCT, sold by Sun Chemical, Parsippany, New Jersey, United States of America. The first sheet 20 and second sheet 30 can be a laminate and the ink 60 can be printed thereon.

Ink 60 can be printed using any methods known in the art including but not limited to gravure printing, flexographic printing, and offset printing, letter press, lithography, plateless, post press, and screen printing. Gravure printing is the direct transfer of liquid ink to substrate from a metal image carrier. The image is lower than the surface of the image carrier base. Flexography printing is the direct transfer of liquid ink to substrate from a photopolymer image carrier. The image is raised above the surface of the image carrier base. Offset printing is the indirect transfer of paste ink to substrate from a rubber 'blanket' that is intermediate to substrate and the thin metal image carrier. Examples of plateless printing include electronic printing, ink jet printing, magnetography, ion deposition printing, direct charge deposition printing, and the Mead Cycolor Photocapsule process.

### Thermoforming

The pouch 10 can be formed by thermoforming. In thermoforming, heat can be applied to one or more of the first sheet 20 and second sheet 30. The heat may be applied using any suitable means. For example, the sheet may be heated directly by passing it under a heating element or through hot air, prior to feeding it onto a surface or once on a surface. Alternatively, it may be heated indirectly, for example by heating the surface or applying a hot item onto the sheet. In some embodiments, the sheet is heated using an infrared lamp. The sheet may be heated to a temperature of about 50 to about 150 deg. C., about 50 to about 120 deg. C., about 60 to about 130 deg. C., about 70 to about 120 deg. C., or about 60 to about 90 deg. C. Alternatively, the sheet can be wetted by any suitable means, for example directly by spraying a wetting agent (including water, a solution of the film composition, a plasticizer for the film composition, or any combination of the foregoing) onto the sheet, prior to feeding it onto the surface or once on the surface, or indirectly by wetting the surface or by applying a wet item onto the sheet.

Once a sheet has been heated and/or wetted, it may be drawn into an appropriate mold, for example by using a vacuum. The filling of the molded sheet can be accomplished using any suitable means. In some embodiments, the method will depend on the product form and required speed of filling. In some embodiments, the molded sheet is filled by in-line filling techniques. The filled, open packets are then closed forming the pouches, using another sheet, by any suitable method. This may be accomplished while in horizontal position and in continuous, constant motion. The closing may be accomplished by continuously feeding a sheet over and onto the open packets and then sealing the first sheet 20 and second sheet 30 together, typically in the area between the molds and thus between the packets.

Any suitable method of sealing the packet and/or the individual compartments thereof may be utilized. Non-limiting examples of such means include heat sealing, solvent welding, solvent or wet sealing, and combinations thereof. Heat and or solvent can be applied to the entire surface of the sheet or only the area which is to form the seal is treated with heat or solvent. The heat or solvent can be applied by any method, typically on the closing material, and typically only on the areas which are to form the seal. If solvent or wet sealing or welding is used, heat can also be applied. Wet or solvent sealing/welding methods include selectively applying solvent onto the area between the molds, or on the closing material, by for example, spraying or printing this onto these areas, and then applying pressure onto these areas, to form the seal. Sealing rolls and belts as described above that optionally also provide heat can be used, for example.

The formed pouches 10 may then be cut by a cutting device. Cutting can be accomplished using any known method. The cutting can be done in continuous manner, optionally with constant speed and in a horizontal position. The cutting device can, for example, be a sharp item or a hot item, whereby in the latter case, the hot item 'burns' through the sheet/sealing area.

The different compartments of a multi-compartment pouches may be made together in a side-by-side style wherein the resulting, cojoined pouches may or may not be separated by cutting. Alternatively, the compartments can be made separately and then joined together for example in a superposed position.

The process for making the water soluble pouch 10 can comprise the steps of providing the first sheet and the second sheet wherein the ink is disposed on interior surface of at least one of the first sheet and the second sheet; thermoforming at least one of the first sheet and the second sheet to form a cavity; depositing the substrate treatment agent into the cavity; and joining at least a portion of the interior surface of the first sheet and the interior surface of the second sheet to form the chamber.

### Substrate Treatment Agent

The substrate treatment agent 50 can be a liquid, but may be a solid or tablet. By the term 'liquid' it is meant to include liquid, paste, waxy or gel compositions. A liquid substrate treatment agent 50 may comprise a solid. Solids may include powder or agglomerates, such as micro-capsules, beads, noodles or one or more pearlised balls or mixtures thereof. Such a solid element may provide a technical benefit, through the wash or as a pre-treat, delayed or sequential release component. Alternatively it may provide an aesthetic effect. The substrate treatment agents 50 of the present invention may comprise one or more of the ingredients discussed below.

The substrate treatment agent 50 of the present invention can comprise a surfactant. The total surfactant level may be in the range of from about 1% to 80% by weight of the substrate treatment agent 50.

Further detersive surfactants utilized can be of the anionic, nonionic, zwitterionic, ampholytic, zwitterionic, semi-polar or cationic type or can comprise compatible mixtures of these types. The surfactants can be selected from the group consisting of anionic, nonionic, cationic surfactants and mixtures thereof. Detergent surfactants useful herein are described in U.S. Patent 3,664,961, Norris, issued May 23, 1972, U.S. Patent 3,919,678, Laughlin et al., issued December 30, 1975, U.S. Patent 4,222,905, Cockrell, issued September 16, 1980, and in U.S. Patent 4,239,659, Murphy, issued December 16, 1980. Anionic and nonionic surfactants can be practical.

Nonionic surfactants can be those of the formula R¹(OC₂H₄)ₙOH, wherein R¹ is a C₁₀-C₁₆ alkyl group or a C₈-C₁₂ alkyl phenyl group, and n is from 3 to about 80. Particularly practical are condensation products of C₁₂-C₁₅ alcohols with from about 5 to about 20 moles of ethylene oxide per mole of alcohol, e.g., C₁₂-C₁₃ alcohol condensed with about 6.5 moles of ethylene oxide per mole of alcohol.

Detersive enzymes may be incorporated into the substrate treatment agents 50 of the present invention. Suitable detersive enzymes for use herein include protease, amylase, lipase, cellulase, carbohydrase including mannanase and endoglucanase, and mixtures thereof. Enzymes can be used at their art-taught levels, for example at levels recommended by suppliers. Typical levels in the substrate treatment agents are from about 0.0001% to about 5%. When enzymes are present, they can be used at very low levels, e.g., from about 0.001% or lower, in certain embodiments of the invention; or they can be used in heavier-duty laundry detergent formulations in accordance with the invention at higher levels, e.g., about 0.1% and higher. In accordance with a preference of some consumers for "non-biological" detergents, the present invention includes both enzyme-containing and enzyme-free embodiments.

Deposition aids may be incorporated into the substrate treatment agent 50 of the present invention. As used herein, "deposition aid" refers to any cationic polymer or combination of cationic polymers that significantly enhance the deposition of a fabric care benefit agent onto the fabric during laundering.

The deposition aid can be a cationic or amphoteric polymer. The amphoteric polymers of the present invention can also have a net cationic charge, i.e.; the total cationic charges on these polymers will exceed the total anionic charge. Nonlimiting examples of deposition enhancing agents are cationic polysaccharides, chitosan and its derivatives and cationic synthetic polymers. Suitable cationic polysaccharides include cationic cellulose derivatives, cationic guar gum derivatives, chitosan and derivatives, cationic starches and mixtures thereof.

In one embodiment of the present invention, the substrate treatment agent 50 can comprise a rheology modifier. The rheology modifier can be selected from the group consisting of non-polymeric crystalline, hydroxy-functional materials, polymeric rheology modifiers which impart shear thinning characteristics to the aqueous liquid matrix of the substrate treatment agent 50. Crystalline, hydroxy-functional materials are rheology modifiers which form thread-like structuring systems throughout the matrix of the substrate treatment agent 50 upon in situ crystallization in the matrix. Specific examples of suitable crystalline, hydroxyl-containing rheology modifiers include castor oil and its derivatives. Also practical are hydrogenated castor oil derivatives such as hydrogenated castor oil and hydrogenated castor wax. Commercially available, castor oil-based, crystalline, hydroxyl-containing rheology modifiers include THIXCIN® from Rheox, Inc. (now Elementis). Polymeric rheology modifiers can be selected from polyacrylates, polymeric gums, other non-gum polysaccharides, and combinations of these polymeric materials. Practical polymeric gum materials include pectine, alginate, arabinogalactan (gum Arabic), carrageenan, gellan gum, xanthan gum, guar gum and mixtures thereof.

The substrate treatment agents 50s of the present invention may optionally comprise a builder. Suitable builders include polycarboxylate builders include cyclic compounds, particularly alicyclic compounds, such as those described in U.S. Patents 3,923,679; 3,835,163; 4,158,635; 4,120,874 and 4,102,903. Particularly suitable are citrate builders, e.g., citric acid and soluble salts thereof, particularly sodium salts thereof.

Other suitable organic builders include aminocarboxylate builders such as salts of MGDA (methyl-glycine-diacetic acid), GLDA (glutamic-N,N- diacetic acid), EDDS (ethylene diamine disuccinates) iminodisuccinic acid (IDS) and carboxymethyl inulin. Salts of MGDA and GLDA are especially suitable, with the tri-sodium salt thereof being practical and a sodium/potassium salt being particularly practical for the favourable hygroscopicity and fast dissolution properties when in particulate form.

Other suitable aminocarboxylate builders include; for example, salts of aspartic acid-N-monoacetic acid (ASMA), aspartic acid-N,N-diacetic acid (ASDA), aspartic acid-N- monopropionic acid (ASMP), iminodisuccinic acid (IDA), N- (2-sulfomethyl) aspartic acid (SMAS), N- (2-sulfoethyl) aspartic acid (SEAS), N- (2- sulfomethyl) glutamic acid (SMGL), N- (2- sulfoethyl) glutamic acid (SEGL) and IDS (iminodiacetic acid) such as salts of N- methyliminodiacetic acid (MIDA), alpha- alanine-N,N-diacetic acid (alpha -ALDA), serine-N,N-diacetic acid (SEDA), isoserine-N,N-diacetic acid (ISDA), phenylalanine-N,N-diacetic acid (PHDA), anthranilic acid- N ,N - diacetic acid (ANDA), sulfanilic acid-N, N-diacetic acid (SLDA), taurine-N, N-diacetic acid (TUDA), ethylene diamine tetraacetic acid and salts thereof (EDTA), diethylene triamine penta acetates (DTPA) and sulfomethyl-N,N-diacetic acid (SMDA).

Other practical builders include aluminosilicates such as zeolite A, B or MAP; fatty acids or salts, suitably sodium salts, thereof, suitably C12-C18 saturated and/or unsaturated fatty acids; and alkali or alkali earth metal carbonates such as sodium carbonate.

Bleaching agents suitable herein include chlorine and oxygen bleaches, especially inorganic perhydrate salts such as sodium perborate mono-and tetrahydrates and sodium percarbonate optionally coated to provide controlled rate of release (see, for example, GB-A-1466799 on sulfate/carbonate coatings), preformed organic peroxyacids and mixtures thereof with organic peroxyacid bleach precursors and/or transition metal-containing bleach catalysts (especially manganese or cobalt). Inorganic perhydrate salts are typically incorporated at levels in the range from about 1% to about 60% by weight, optionally from about 2% to about 30% by weight or even from about 5% to about 25% by weight of substrate treatment agent 50.

Peroxyacid bleach precursors suitable for use herein include precursors of perbenzoic acid and substituted perbenzoic acid; cationic peroxyacid precursors; peracetic acid precursors such as TAED, sodium acetoxybenzene sulfonate and pentaacetylglucose; pernonanoic acid precursors such as sodium 3,5,5-trimethylhexanoyloxybenzene sulfonate (iso-NOBS) and sodium nonanoyloxybenzene sulfonate (NOBS); amide substituted alkyl peroxyacid precursors (EP-A-0170386); and benzoxazin peroxyacid precursors (EP-A-0332294 and EP-A-0482807). Bleach precursors are typically incorporated at levels in the range from about 0.5% to about 25%, suitably from about 1% to about 10% by weight of substrate treatment agent 50 while the preformed organic peroxyacids themselves are typically incorporated at levels in the range from 0.5% to 25% by weight, or even from 1% to 10% by weight of substrate treatment agent 50. Bleach catalysts practical for use herein include the manganese triazacyclononane and related complexes (US-A-4246612, US-A-5227084); Co, Cu, Mn and Fe bispyridylamine and related complexes (US-A-5114611); and pentamine acetate cobalt(III) and related complexes(US-A-4810410).

Inorganic and organic bleaches are suitable for use herein. Inorganic bleaches include perhydrate salts such as perborate, percarbonate, perphosphate, persulfate and persilicate salts. The inorganic perhydrate salts are normally the alkali metal salts. The inorganic perhydrate salt may be included as the crystalline solid without additional protection. Alternatively, the salt can be coated.

Alkali metal percarbonates, particularly sodium percarbonate, are practical for use herein. The percarbonate can be incorporated into the products in a coated form which provides in-product stability.

Potassium peroxymonopersulfate is another inorganic perhydrate salt of utility herein.

Typical organic bleaches are organic peroxyacids, especially diperoxydodecanedioc acid, diperoxytetradecanedioc acid, and diperoxyhexadecanedioc acid. Mono- and diperazelaic acid, mono- and diperbrassylic acid are also suitable herein. Diacyl and Tetraacylperoxides, for instance dibenzoyl peroxide and dilauroyl peroxide, are other organic peroxides that can be used in the context of this invention.

Further typical organic bleaches include the peroxyacids, particular examples being the alkylperoxy acids and the arylperoxy acids. Practical representatives are (a) peroxybenzoic acid and its ring-substituted derivatives, such as alkylperoxybenzoic acids, but also peroxy-α-naphthoic acid and magnesium monoperphthalate, (b) the aliphatic or substituted aliphatic peroxy acids, such as peroxylauric acid, peroxystearic acid, ε-phthalimidoperoxycaproic acid[phthaloiminoperoxyhexanoic acid (PAP)], o-carboxybenzamidoperoxycaproic acid, N-nonenylamidoperadipic acid and N-nonenylamidopersuccinates, and (c) aliphatic and araliphatic peroxydicarboxylic acids, such as 1,12-diperoxycarboxylic acid, 1,9-diperoxyazelaic acid, diperoxysebacic acid, diperoxybrassylic acid, the diperoxyphthalic acids, 2-decyldiperoxybutane-1,4-dioic acid, N,N-terephthaloyldi(6-aminopercaproic acid).

The level of bleaching agent in the substrate treatment agent 50 of the invention can be from about 1 to about 20%, optionally from about 2 to about 15%, even from about 3 to about 12%, or even from about 4 to about 10% by weight of the substrate treatment agent 50. The second substrate treatment agent 50 can comprise a bleaching agent.

Bleach activators are typically organic peracid precursors that enhance the bleaching action in the course of cleaning at temperatures of 60° C and below. Bleach activators suitable for use herein include compounds which, under perhydrolysis conditions, give aliphatic peroxoycarboxylic acids having from 1 to 12 carbon atoms, in particular from 2 to 10 carbon atoms, and/or optionally substituted perbenzoic acid. Suitable substances bear O-acyl and/or N-acyl groups of the number of carbon atoms specified and/or optionally substituted benzoyl groups. Suitable substances include polyacylated alkylenediamines, in particular tetraacetylethylenediamine (TAED), acylated triazine derivatives, in particular 1,5-diacetyl-2,4-dioxohexahydro-1,3,5-triazine (DADHT), acylated glycolurils, in particular tetraacetylglycoluril (TAGU), N-acylimides, in particular N-nonanoylsuccinimide (NOSI), acylated phenolsulfonates, in particular n-nonanoyl- or isononanoyloxybenzenesulfonate (n- or iso-NOBS), decanoyloxybenzoic acid (DOBA), carboxylic anhydrides, in particular phthalic anhydride, acylated polyhydric alcohols, in particular triacetin, ethylene glycol diacetate and 2,5-diacetoxy-2,5-dihydrofuran and also triethylacetyl citrate (TEAC). Bleach activators if included in the substrate treatment agents 50s of the invention are in a level of from about 0.01 to about 10%, or from about 0.1 to about 5% or from about 1 to about 4% by weight of the total substrate treatment agent 50. If the substrate treatment agent 50 comprises bleach activator then the bleach activator can be placed in the second substrate treatment agent 50.

The substrate treatment agent 50 can comprise a bleach catalyst, such as a metal containing bleach catalyst. The metal containing bleach catalyst can be a transition metal containing bleach catalyst, such as a manganese or cobalt-containing bleach catalyst.

Bleach catalysts suitable for use herein include the manganese triazacyclononane and related complexes (US-A-4246612, US-A-5227084); Co, Cu, Mn and Fe bispyridylamine and related complexes (US-A-5114611); and pentamine acetate cobalt(III) and related complexes(US-A-4810410). A complete description of bleach catalysts suitable for use herein can be found in WO 99/06521, pages 34, line 26 to page 40, line 16.

Manganese bleach catalysts are practical for use in the substrate treatment agent 50 of the invention. A suitable catalyst for use herein is a dinuclear manganese-complex having the general formula: 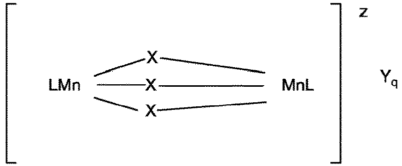 wherein Mn is manganese which can individually be in the III or IV oxidation state; each x represents a coordinating or bridging species selected from the group consisting of H2O, O22-, O2-, OH-, HO2-, SH-, S2-, >SO, Cl-, N3-, SCN-, RCOO-, NH2- and NR3, with R being H, alkyl or aryl, (optionally substituted); L is a ligand which is an organic molecule containing a number of nitrogen atoms which coordinates via all or some of its nitrogen atoms to the manganese centres; z denotes the charge of the complex and is an integer which can be positive or negative; Y is a monovalent or multivalent counter-ion, leading to charge neutrality, which is dependent upon the charge z of the complex; and q = z/[charge Y].

Suitable manganese-complexes are those wherein x is either CH₃COO⁻ or O² or mixtures thereof, optionally wherein the manganese is in the IV oxidation state and x is O²⁻. Suitable ligands are those which coordinate via three nitrogen atoms to one of the manganese centres, optionally being of a macrocyclic nature. Suitable ligands include:
(1) 1,4,7-trimethyl-1,4,7-triazacyclononane, (Me-TACN); and
(2) 1,2,4,7-tetramethyl-1,4,7-triazacyclononane, (Me-Me TACN).

The type of counter-ion Y for charge neutrality may not be critical for the activity of the complex and can be selected from, for example, any of the following counter-ions: chloride; sulphate; nitrate; methylsulphate; surfanctant anions, such as the long-chain alkylsulphates, alkylsulphonates, alkylbenzenesulphonates, tosylate, trifluoromethylsulphonate, perchlorate (ClO₄⁻), BPh₄⁻, and PF₆⁻' though some counter-ions are more suitable than others for reasons of product property and safety.

Consequently, suitable manganese complexes useable in the present invention include:
(I) [(Me-TACN)Mn^{IV}(Âµ-0)₃Mn^{IV}(Me-TACN)]²⁺(PF₆⁻)₂
(II) [(Me-MeTACN)Mn^{IV}(Âµ-0)₃Mn^{IV}(Me-MeTACN)]²⁺(PF₆⁻)₂
(III) [(Me-TACN)Mn^{III}(Âµ-0)(Âµ-OAc)₂Mn^{III}(Me-TACN)]²⁺(PF₆⁻)₂
(IV) [(Me-MeTACN)Mn^{III}(Âµ-0)(Âµ-OAc)₂Mn^{III}(Me-MeTACN)]²⁺(PF₆⁻)₂ which hereinafter may also be abbreviated as:
   (I) [MnN₂(Âµ-0)₃(Me-TACN)₂](PF₆)₂
   (II) [Mn^{IV}₂(Âµ-0)₃(Me-MeTACN)₂](PF₆)₂
   (III) [Mn^{III}₂(Âµ-0)(Âµ-OAc)₂(Me-TACN)₂](PF₆)₂
   (IV) [Mn^{III}₂(Âµ-0)(Âµ-OAc)₂(Me-TACN)₂](PF₆)₂

The structure of I is given below: 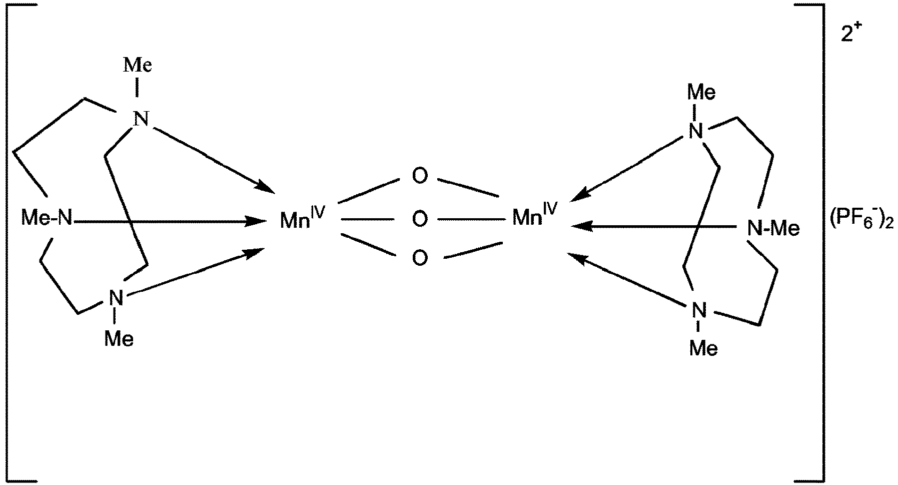 abbreviated as [Mn^{IV}₂(Âµ-0)₃(Me-TACN)₂](PF₆)₂.

The structure of II is given below: 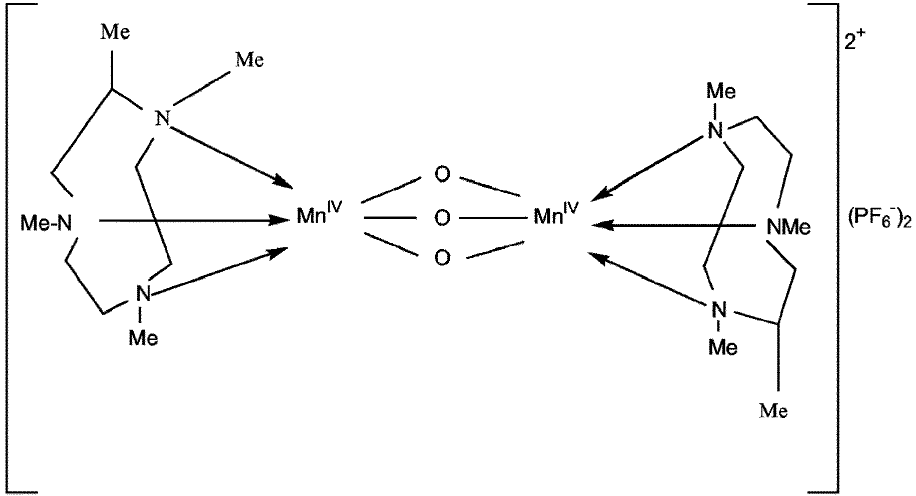 abbreviated as [Mn^{IV}₂(Âµ-0)₃(Me-MeTACN)₂](PF₆)₂.

It is of note that the manganese complexes are also disclosed in EP-A-0458397 and EP-A-0458398 as unusually effective bleach and oxidation catalysts. In the further description of this invention they will also be simply referred to as the "catalyst".

Bleach catalyst can be included in the substrate treatment agents 50 of the invention can be at a level of from about 0.001 to about 10%, or even from about 0.05 to about 2% by weight of the total substrate treatment agent 50.

The substrate treatment agent 50 may comprise a fabric care benefit agent. As used herein, "fabric care benefit agent" refers to any material that can provide fabric care benefits such as fabric softening, color protection, pill/fuzz reduction, anti-abrasion, anti-wrinkle, and the like to garments and fabrics, particularly on cotton and cotton-rich garments and fabrics, when an adequate amount of the material is present on the garment/fabric. Non-limiting examples of fabric care benefit agents include cationic surfactants, silicones, polyolefin waxes, latexes, oily sugar derivatives, cationic polysaccharides, polyurethanes, fatty acids and mixtures thereof. Fabric care benefit agents when present in the substrate treatment agent 50, are suitably at levels of up to about 30% by weight of the substrate treatment agent 50, more typically from about 1% to about 20%, or even from about 2% to about 10%.

The substrate treatment agent 50 may comprise a automatic dishwashing care benefit agent. As used herein, "automatic dishwashing care benefit agent" refers to any material that can provide shine, fast drying, metal, glass or plastic protection benefits. Non-limiting examples of automatic dishwashing care benefit agents include organic shine polymers, especially sulfonated / carboxylated polymers, surface modifying polymers or surfactants inducing fast drying, metal care agents like benzatriazoles and metal salts including Zinc salts, and anti-corrosion agents including silicates e.g. sodium silicate.

Examples of other suitable cleaning adjunct materials include, but are not limited to; enzyme stabilizing systems; antioxidants, opacifier, pearlescent agent, hueing dye, scavenging agents including fixing agents for anionic dyes, complexing agents for anionic surfactants, and mixtures thereof; optical brighteners or fluorescers; soil release polymers; dispersants; suds suppressors; dyes; colorants; hydrotropes such as toluenesulfonates, cumenesulfonates and naphthalenesulfonates; color speckles; perfumes and perfume microcapsules, colored beads, spheres or extrudates; clay softening agents, alkalinity sources and mixtures thereof.

The substrate treatment agents 50 herein can generally be prepared by mixing the ingredients together. If a pearlescent material is used it should be added in the late stages of mixing. If a rheology modifier is used, it is suitable to first form a pre-mix within which the rheology modifier is dispersed in a portion of the water and optionally other ingredients eventually used to comprise the substrate treatment agent 50. This pre-mix is formed in such a way that it forms a structured liquid. To this structured pre-mix can then be added, while the pre-mix is under agitation, the surfactant(s) and other laundry adjunct materials, along with water and whatever optional detergent composition adjuncts are to be used.

The substrate treatment agents 50 for use in a automatic dishwasher can be as tabulated below (given in grams). The constituents are introduced into a dual-compartment water-soluble pack having a first compartment comprising a solid composition (in powder form) and a liquid compartment comprising the liquid composition. The water-soluble film used can be Monosol M8630 film as supplied by Monosol. The water-soluble film can have printing on the interior of one or both compartments.

| Powder | A | B |
|---|---|---|
| Percarbonate | 1.41 | 1.41 |
| TAED | 0.32 | 0.32 |
| Cobalt catalyst | 0.0013 | - |
| Mn TACN | - | 0.0013 |
| Sodium carbonate | 7.17 | 7.17 |
| Sodium Sulphate | 2.5 | 2.5 |
| Amylase | 0.0013 | 0.0013 |
| Protease | 0.013 | 0.013 |
| Acusol 588 | 1.20 | 1.20 |
| NI surfactant | 0.10 | 0.10 |
| BTA | 0.0080 | 0.0080 |
| HEDP | 0.10 | 0.10 |
| MGDA | 2.20 | 2.20 |

| Liquid Top | | |
|---|---|---|
| NI surfactant | 1.17 | 1.17 |
| DPG | 0.44 | 0.44 |
| Amine Oxide | 0.05 | 0.05 |
| Glycerine | 0.08 | 0.08 |
| PEI600 EO7 PO1 90% Quat | 0.25 | 0.25 |

Example substrate treatment agents 50 for multi-compartment pouches 10 for use in an automatic clothes washing machine are set forth in the following table. The substrate treatment agents 50 can be provided in a water soluble pouch 10 having two or three or more compartments. The pouches 10 can be made with water-soluble film according to those disclosed in US Patent Application 2011/0188784A1.

| | | | | | | | | |
|---|---|---|---|---|---|---|---|---|
| | 3 compartments | | | 2 compartments | | 3 compartments | | |
| Compartment # | 1 | 2 | 3 | 1 | 2 | 1 | 2 | 3 |
| Dosage (g) | 34.0 | 3.5 | 3.5 | 30.0 | 5.0 | 25.0 | 1.5 | 4.0 |
| Ingredients | Weight % | | | | | | | |
| Alkylbenzene sulfonic acid | 20.0 | 20.0 | 20.0 | 10.0 | 20.0 | 20.0 | | |
| Alkyl sulfate | | | | 2.0 | | | | |
| C12-14 alkyl 7-ethoxylate | 17.0 | 17.0 | 17.0 | | 17.0 | 17.0 | | |
| Cationic surfactant | | | | 1.0 | | | | |
| Zeolite A | | | | 10.0 | | | | |
| C12-18 Fatty acid | 13.0 | 13.0 | 13.0 | | 18.0 | 18.0 | | |
| Sodium acetate | | | | 4.0 | | | | |
| Enzymes | 0-3 | 0-3 | 0-3 | 0-3 | | 0-3 | | |
| Sodium Percarbonate | | | | 11.0 | | | | |
| TAED | | | | 4.0 | | | | |
| Organic catalyst ¹ | | | | 1.0 | | | | |
| PAP granule ² | | | | | | | | 50 |
| Polycarboxylate | | | | 1.0 | | | | |
| Ethoxysulfated Hexamethylene Diamine Dimethyl Quat | 2.2 | 2.2 | 2.2 | | | | | |
| Hydroxyethane diphosphonic acid | 0.6 | 0.6 | 0.6 | 0.5 | | | | |
| Ethylene diamine tetra(methylene phosphonic) acid | | | | | | 0.4 | | |
| Brightener | 0.2 5.0 | 0.2 | 0.2 | 0.3 | | 0.3 | | |
| Alkoxylated polyamine⁶ | | | | | 4.0 | 7.0 | | |
| Hueing dye ⁴ | | | 0.05 | | 0.035 | | 0.12 | |
| Perfume | 1.7 | 1.7 | | 0.6 | | 1.5 | | |
| Water | 10.0 | 10.0 | 10.0 | | 4.1 | 1.0 | | |
| Glycerol | 5.0 | | | | | 6.0 | 10.0 | |
| Sorbitol | | | | | 1 | | | |
| Propane diol | 5.0 | 5.0 | 5.0 | | 30.0 | 11.0 | 89.0 | |
| Buffers (sodium carbonate, monoethanolamine) ⁵ | To pH 8.0 for liquids | | | | | | | |
| | To RA > 5.0 for powders | | | | | | | |
| Minors (antioxidant, aesthetics,...), sodium sulfate for powders | To 100% | | | | | | | |

| | | | | | | | | |
|---|---|---|---|---|---|---|---|---|
| ¹ Sulfuric acid mono-[2-(3,4-dihydro-isoquinolin-2-yl)-1-(2-ethyl-hexyloxymethyl)-ethyl]ester as described in US7169744 ² PAP = Phthaloyl-Amino-Peroxycaproic acid, as a 70% active wet cake ³ Polyethylenimine (MW = 600) with 20 ethoxylate groups per -NH. ⁴ Ethoxylated thiophene, EO (R₁+R₂) = 5 5 RA = Reserve Alkalinity (g NaOH/dose) 6 PEI600 EO20, available from BASF | | | | | | | | |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A water soluble pouch (10) comprising:
a water soluble first sheet (20);
a water soluble second sheet (30) joined to said water soluble first sheet to at least partially define a chamber (40) containing a substrate treatment agent (50); and
an ink (60);
wherein each of said first sheet and said second sheet have an interior surface (70) and an opposing exterior surface (80);
wherein said chamber is at least partially defined by said interior surface of said first sheet and said interior surface of said second sheet; and
wherein said ink comprises a pigment wherein said pigment is a diketopyrrolo-pyrrole of the general formula 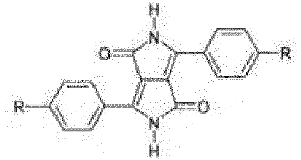
wherein each R can be the same or different and each R represents a cyano group, methyl or an alkyl group, a hydrogen group, a phenyl group, or a halogen group;
wherein said ink is between said substrate treatment agent and at least one of said interior surface of said first sheet and said interior surface of said second sheet.

2. The water soluble pouch according to Claim 1, wherein said diketopyrrolo-pyrrole pigment is selected from the group consisting of pigment red 254, pigment red 255, pigment red 264, pigment red 272, pigment orange 73, and mixtures thereof.

3. The water soluble pouch according to Claim 2, wherein said diketopyrrolo-pyrrole pigment is pigment red 254.

4. The water soluble pouch according to any one of the preceding claims, wherein said substrate treatment agent comprises a bleaching agent.

5. The water soluble pouch according to any one of the preceding claims, wherein said first sheet and said second sheet comprise polyvinyl alcohol.

6. The water soluble pouch according to any one of the preceding claims, wherein at least one of said first sheet and said second sheet is thermoformed.

7. The water soluble pouch according to any one of the preceding claims, wherein said ink forms usage instructions or storage instructions for said water soluble pouch.

## Patentansprüche

1. Wasserlöslicher Beutel (10), umfassend:
eine wasserlösliche erste Folie (20);
eine wasserlösliche zweite Folie (30), die mit der wasserlöslichen ersten Folie verbunden ist, um mindestens teilweise eine Kammer (40) zu definieren, die ein Substratbehandlungsmittel (50) enthält; und
eine Tinte (60);
wobei jede der ersten Folie und der zweiten Folie eine Innenoberfläche (70) und eine gegenüberliegende Außenoberfläche (80) aufweist;
wobei die Kammer mindestens teilweise durch die Innenoberfläche der ersten Folie und die Innenoberfläche der zweiten Folie definiert ist; und
wobei die Tinte ein Pigment umfasst, wobei das Pigment ein Diketopyrrolopyrrol
der allgemeinen Formel 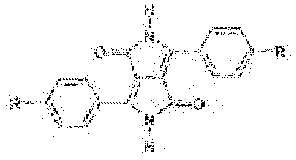
ist, worin jedes R gleich oder verschieden sein kann und jedes R für eine Cyanogruppe, Methyl oder eine Alkylgruppe, eine Wasserstoffgruppe, eine Phenylgruppe oder eine Halogengruppe steht;
wobei sich die Tinte zwischen dem Substratbehandlungsmittel und mindestens einem aus der Innenoberfläche der ersten Folie und/oder der Innenoberfläche der zweiten Folie befindet.

2. Wasserlöslicher Beutel nach Anspruch 1, wobei das Diketopyrrolopyrrolpigment ausgewählt ist aus der Gruppe bestehend aus Pigment Red 254, Pigment Red 255, Pigment Red 264, Pigment Red 272, Pigment Orange 73 und Mischungen davon.

3. Wasserlöslicher Beutel nach Anspruch 2, wobei das Diketopyrrolopyrrolpigment Pigment Red 254 ist.

4. Wasserlöslicher Beutel nach einem der vorstehenden Ansprüche, wobei das Substratbehandlungsmittel ein Bleichmittel umfasst.

5. Wasserlöslicher Beutel nach einem der vorstehenden Ansprüche, wobei die erste Folie und die zweite Folie Polyvinylalkohol umfassen.

6. Wasserlöslicher Beutel nach einem der vorstehenden Ansprüche, wobei mindestens eine der ersten Folie und der zweiten Folie thermogeformt ist.

7. Wasserlöslicher Beutel nach einem der vorhergehenden Ansprüche, wobei die Tinte Gebrauchsanweisungen oder Lagerungsanweisungen für den wasserlöslichen Beutel bildet.

## Revendications

1. Sachet hydrosoluble (10) comprenant :
une première feuille hydrosoluble (20) ;
une deuxième feuille hydrosoluble (30) jointe à ladite première feuille hydrosoluble pour définir au moins partiellement une chambre (40) contenant un agent de traitement de substrat (50) ; et
une encre (60) ;
dans lequel chacune de ladite première feuille et de ladite deuxième feuille a une surface intérieure (70) et une surface extérieure opposée (80) ;
dans lequel ladite chambre est au moins partiellement définie par ladite surface intérieure de ladite première feuille et ladite surface intérieure de ladite deuxième feuille ; et
dans lequel ladite encre comprend un pigment dans lequel ledit pigment est un dicétopyrrolo-pyrrole de la formule générale 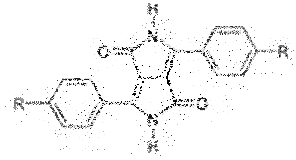
dans lequel chaque R peut être identique ou différent et chaque R représente un groupe cyano, méthyle ou un groupe alkyle, un groupe hydrogène, un groupe phényle, ou un groupe halogène ;
dans lequel ladite encre est entre ledit agent de traitement de substrat et au moins l'une de ladite surface intérieure de ladite première feuille et de ladite surface intérieure de ladite deuxième feuille.

2. Sachet hydrosoluble selon la revendication 1, dans lequel ledit pigment dicétopyrrolo-pyrrole est choisi dans le groupe constitué de pigment rouge 254, pigment rouge 255, pigment rouge 264, pigment rouge 272, pigment orange 73, et des mélanges de ceux-ci.

3. Sachet hydrosoluble selon la revendication 2, dans lequel ledit pigment dicétopyrrolo-pyrrole est le pigment rouge 254.

4. Sachet hydrosoluble selon l'une quelconque des revendications précédentes, dans lequel ledit agent de traitement de substrat comprend un agent de blanchiment.

5. Sachet hydrosoluble selon l'une quelconque des revendications précédentes, dans lequel ladite première feuille et ladite deuxième feuille comprennent de l'alcool polyvinylique.

6. Sachet hydrosoluble selon l'une quelconque des revendications précédentes, dans lequel au moins l'une de ladite première feuille et de ladite deuxième feuille est thermoformée.

7. Sachet hydrosoluble selon l'une quelconque des revendications précédentes, dans lequel ladite encre forme des instructions d'utilisation ou des instructions de stockage pour ledit sachet hydrosoluble.
